# EUROPEAN PATENT APPLICATION

(11) **EP 1 701 083 A2**
(43) Date of publication of application: **13.09.2006**
(21) Application number: 06075259.9
(22) Date of filing: 06.02.2006
(51) Int. Cl.: F16L 47/24, F16L 33/28

(54) **System for joining tubular bodies**

(30) Priority: 10.03.2005 IT RE20050024
(71) Applicant: Dallai ernesto societa a Responsibilita limitata, 42046 Reggiolo (Reggio Emilia) (IT)
(72) Inventor: Dallai, Mirco, 42046 Reggiolo (Reggio Emilia) (IT)
(74) Representative: Corradini, Corrado

(57) **Abstract**

The system for joining tubular bodies for the transportation of pressurised or depressurised fluids comprises a metal tubular body (1), a plastic connection body (2) in which an end (1a) of said metal tubular body (1) is embedded, the portion of metal tubular body (1) closest to said end (1a) being provided with at least one opening (3) filled with the plastic material of the connection body (2). According to the invention, said opening (3) has one side, proximal to said end (1a) having a first part (4) lying on a plane normal to the axis (X-X) of the metal tubular body (1). The joining system according to the invention achieves optimal distribution of tensions, relative to the area of the tubular body (1) and of the body (2) surrounding the openings (3), produced by the pressure of the fluid that runs in the piping, and therefore ensures that the joint lasts longer and ensures a better seal.

## Description

The present invention concerns a system for joining a plastic tubular body and a metal tubular body, for pipes having a diameter of more than an inch, in which pressurised or depressurised fluid runs (currently called "transition joint" by the man skilled in the art).

A typical application is to join a plastic tubular body, which acts as a connection body and that is in turn joined at the end to a long plastic pipe, and a metal tubular body having the function of a member of a connection joint between two pipes.

Another application is to join a plastic tubular body, which acts, also in this case, as a connection body with a long plastic pipe, and a metal tubular body that carries a valve for the fluid at its end.

The field of application is in the manufacture of pipes for transporting fluids, in particular running water or waste water, for civil or industrial sites or networks for transportation around the country, even over long distances.

Pipings that have such joints are subjected to the pressure exerted on the inside by the fluid that runs in them. Moreover, since such pipes are located outside, for example underground, or even inside production plants, they are subject to heat fluctuations due to the surrounding climatic conditions. Therefore, plastic and metal pipes that form pipings undergo continuous expansion and contraction. This, together with the internal pressure stresses to which they are subjected, causes a considerable weakening of the join of the two pipes that, due to the greater expansion undergone by plastic, generally polyethylene, compared to metal, can lead to it breaking and/or to the formation of cracks with consequent leaking of the pressurised fluid being transported.

In order to improve the resistance of the joint, a system for joining a plastic tubular body and a metal tubular body is known that has a plastic connection body, which is then butt-welded (coaxially) to the plastic pipe, in which an end of the metal tubular body is embedded. Generally, the joint is made through the known injection moulding process.

An example of the system described above is illustrated in patent GB 806173 published in 1958.

The end of the metal tubular body embedded in the plastic body is provided with a plurality of circular holes arranged staggered on many rows that are filled with the plastic material of the connection body during moulding.

Basically, the plastic sets not only around the end of the metal tubular body embedded in the plastic body but also in the circular holes.

This solution does have some advantages, like a better seat over time. However, with pipes having a large diameter, greater than 1", and for the transportation of liquids under relatively high pressure, the seal lasts substantially less time.

Therefore, there is a great need to have a system for joining pipes.

The purpose of the present invention is to provide a system for joining pipes having structural and functional characteristics such as to ensure a perfect seal over time even working in extreme conditions, like large heat fluctuations and high pressures of the fluid being transported, and therefore that can be used with pipes subjected to adverse conditions.

This purpose is accomplished through a system for joining pipes in accordance with claim 1.

The dependent claims outline preferred and particularly advantageous embodiments of the system for joining pipes according to the invention.

Further characteristics and advantages of the invention shall become clear from reading the following description provided as an example and not for limiting purposes, with the help of the figures illustrated in the attached tables, in which:

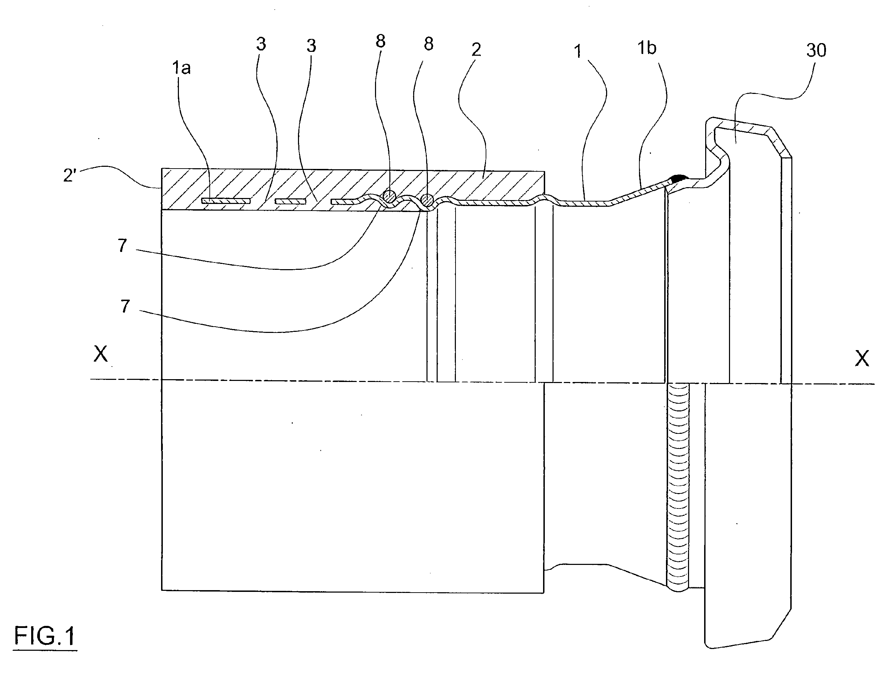

- figure 1 shows a side view, partially in section, of a system for joining pipes in accordance with the present invention;
- figure 2 shows the extension in plan of an end portion of the metal tubular body provided with openings.
- figure 2A shows an enlarged detail of figure 2.

With reference to the aforementioned figures, a metal tubular body and a plastic connection body forming a system for joining pipes in accordance with the present invention are respectively globally indicated with 1 and 2.

The connection body 2 can be fixed to a plastic pipe, not illustrated, through known fastening techniques like butt-welding or gluing of its rear end 2'.

The metal tubular body 1 has an end 1a embedded in the plastic connection body 2 so as to be integrally coupled with it and a free end 1b welded to a joining element 30. The metal tubular body 1 - connection body 2 coupling can be carried out through injection moulding.

The end 1a of the metal tubular body 1 embedded in the body 2 is provided with a plurality of openings 3 arranged equally spaced apart along a first and second row 10, 20 that are circumferential and parallel. The longitudinal axes (i.e. parallel to the axis X-X) of the openings 3 of the first row 10 are arranged in an intermediate position with respect to the longitudinal axes of the openings 3 of the second row 20.

Said openings 3 are filled, during moulding, with the plastic material belonging to the plastic connection body 2 so as to improve the seal between the metal tubular body 1 and the plastic body 2.

Preferably, the connection body 2 is made from thermoplastic material like polyethylene or polyethylene-terephthalate.

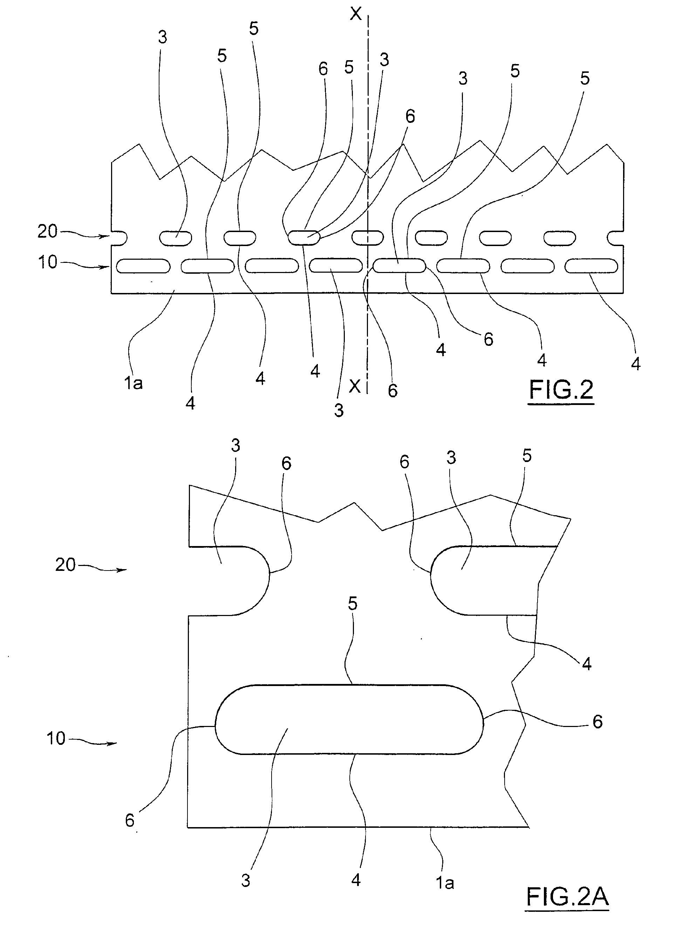

In accordance with the present invention, each opening 3 has a side having a first part 4 lying on a plane normal to the axis X-X of the metal tubular body 1. Basically and as can be seen in figure 2, the first part 4 seen on the extension of the tubular body 1 is arranged perpendicular to the axis X-X that is parallel to the direction of traction.

According to the preferred embodiment of the present invention, the openings 3 have a second part 5 parallel to the first part 4 joined together by two opposite curvilinear parts 6. The first and second part 4, 5 are respectively the one proximal to the end 1a embedded in the plastic body 2 and the one proximal to the free end 1b of the metal tubular body 1 (Fig. 2).

Preferably, the two curvilinear parts 6 of the openings of the first row 10 have the radius of curvature proximal to the first part 4 smaller than the radius of curvature proximal to the second part 5, i.e. the radius of curvature increases from the first part 4 to the second part 5; moreover, the distance between the two curvilinear parts 6 is at least three times the distance between the first part 4 and the second part 5, which are rectilinear.

From experiments it has been found that making the curvatures with variable radius allows a lower contact pressure between plastic body 2 and metal tubular body 1 than that which is obtained with curvatures with constant radius.

In order to further improve the seal, the end 1a of the metal tubular body embedded in the plastic connection body 2 has a pair of parallel circumferential grooves 7 suitable for receiving a respective annular gasket 8 that is fitted before the moulding of the body 2.

In the above description, although explicit reference has been made to a plurality of openings 3 arranged circumferentially to form two rows 10, 20 it is nevertheless possible to equip the end 1a embedded in the connection body 2 with a single row of openings configured in accordance with the present invention or else with openings arranged on more than two rows. Equally, it is possible to directly use a plastic pipe instead of the connection body 2.

The system for joining pipes of the present invention lends itself to being applied to pipes that form pipings suitable for transporting a pressurised fluid, for example water and pipes having a large diameter, greater than 1".

Alternatively, it is possible to use the system of the present invention associated with a water lance for dispensing pressurised water.

The system for joining pipes according to the present invention allows the requirements to be satisfied and allows the drawbacks mentioned in the introductory part of the present description with reference to the prior art to be overcome.

Indeed, it has been found through experiments that the joining system according to the present invention, thanks to the presence of openings having the edge with a part 4 lying on a plane normal to the axis X-X of the metal tubular body, achieves an optimal distribution of tensions, relative to the area of the tubular body 1 and of the body 2 surrounding the openings 3, produced by the pressure of the fluid that runs in the piping, and therefore such a system, in practice, ensures that the joint lasts longer and ensures a better seal. This differs from the systems of the prior art in which the areas of maximum tension are located at each hole.

Moreover, the part 4 of the openings, lying on a plane normal to the axis of the metal tubular body, prevents the so-called "shearing effect" typical of the circular holes used in systems of the prior art, in which the circular hole tends to cut the plastic on the inside.

Of course, a man skilled in the art can bring numerous modifications and variants to the system for joining pipes described above in order to satisfy contingent and specific requirements, all of which are covered by the scope of protection of the invention, as defined by the following claims.

## Claims

1. System for joining tubular bodies for the transportation of pressurised or depressurised fluids, comprising a metal tubular body (1), a plastic connection body (2) in which an end (1a) of said metal tubular body (1) is embedded, the portion of metal tubular body (1) closest to said end (1a) being provided with at least one opening (3) filled with the plastic material of the connection body (2), **characterised in that** said opening (3) has one side, proximal to said end (1a) having a first part (4) lying on a plane normal to the axis (X-X) of the metal tubular body (1).

2. System according to claim 1, in which said opening has a second part (5) parallel to the first part (4) and said first and second part (4, 5) are joined by two opposite curvilinear parts (6) to form the corresponding opening (3).

3. System according to claim 2, in which the radius of curvature of said curvilinear parts (6) increases from the first part (4) to the second part (5).

4. System according to claim 2, in which the distance between the two curvilinear parts (6) is at least three times the distance between the first and second rectilinear parts (4, 5).

5. System according to claim 1, comprising a plurality of openings (3) arranged equally spaced apart along a first circumferential row (10).

6. System according to claim 1, further comprising a second row (20) of openings (3) arranged staggered and parallel to the openings (3) of the first row (10).

7. System according to claim 6, in which the radius of curvature of said curvilinear parts (6) of the openings of the second row (20) decreases from the first part (6) to the second part (5).

8. System according to claim 1, in which the end (1a) of the metal tubular body (1) embedded in the plastic connection body (2) is configured to have a circular groove (7) on the most outer side suitable for receiving an annular gasket (8).

9. System according to claim 1, in which a joining element (30) is welded to the free end (1b) of said metal tubular body.
